# EUROPÄISCHE PATENTSCHRIFT

(11) **EP 2 932 054 B1**
(45) Veröffentlichungstag und Bekanntmachung des Hinweises auf die Patenterteilung: **17.05.2017**
(21) Anmeldenummer: 14701690.1
(22) Anmeldetag: 14.01.2014
(51) Int. Cl.: F01K 23/10, F01K 3/00, F01K 17/04

(54) **GASTURBINENKRAFTWERK MIT VERBESSERTER FLEXIBILISIERUNG**
GAS TURBINE PLANT WITH IMPROVED FLEXIBILITY
CENTRALE A TURBINE A GAZ DE FONCTIONNEMENT PLUS FLEXIBLE

(30) Priorität: 23.01.2013 EP 13152401
(43) Veröffentlichungstag der Anmeldung: 21.10.2015
(73) Patentinhaber: Siemens Aktiengesellschaft, 80333 München (DE)
(72) Erfinder: LENK, Uwe, 08064 Zwickau (DE); TREMEL, Alexander, 91052 Erlangen (DE)
(86) Internationale Anmeldenummer: PCT/EP2014/050600
(87) Internationale Veröffentlichungsnummer: WO 2014/114527

(56) Entgegenhaltungen:
- DE-A1- 19 918 346
- US-A- 5 404 708

## Beschreibung

Die vorliegende Erfindung betrifft ein Gasturbinenkraftwerk umfassend eine Gasturbine, welche einen Verdichter, eine Brennkammer und einen Expander aufweist, weiterhin umfassend einen Wasser-Dampf-Kreislauf, welcher wärmetechnisch mit der Gasturbine derart verschaltet ist, dass bei Betrieb der Gasturbine das aus dieser abgeleitete Abgas Wärme an den Wasser-Dampf-Kreislauf zur Dampferzeugung überträgt. Weiterhin betrifft die vorliegende Erfindung ein Verfahren zum flexiblen Betrieb eines solchen Gasturbinenkraftwerks.

Aufgrund der zunehmenden Stromeinspeisung aus mitunter stark fluktuierenden, erneuerbaren Energiequellen (Windkraftenergie, Solarenergie, etc.) in die öffentlichen Stromversorgungsnetzwerke werden Gaskraftwerke zunehmend zu Regelaufgaben herangezogen, um die Netzwerkstabilität dieser Stromversorgungsnetzwerke zu gewährleisten.

Gaskraftwerke sollen hierbei wie auch in allen nachfolgenden Ausführungsformen in ihrer allgemeinsten Bedeutungsweise verstanden werden. Insbesondere sind hierbei gewöhnliche Gaskraftwerke im Simple-Cycle-Betrieb ebenso mit umfasst, wie auch gekoppelte Gas- und Dampfkraftwerke (GuD). Weiterhin können hierbei auch großtechnische Anlagen mit umfasst sein, die durch eine Gasturbine mit elektrischer Energie versorgt werden können. Ebenfalls soll keine Einschränkung hinsichtlich des Brennstoffs zur Verbrennung in dem Gaskraftwerk erfolgen. Es ist daher z.B. möglich, dass ein Gaskraftwerk mit Erdgas betrieben wird oder diesem eine thermische Feststoffvergasung (Integrated Gasification Combined Cycle IGCC) zur Brennstoffversorgung vorgeschaltet ist.

Aufgrund der den Gaskraftwerken zugewiesenen Regelaufgabe müssen diese verstärkt flexibel betrieben werden können. Gleichzeit müssen diese auch den Anforderungen an einen wirtschaftlichen Betrieb gerecht werden. Hierbei sinkt vor allem durch einen verhältnismäßig unregelmäßigen Leistungsbetrieb unter häufigen Anfahr- und Abfahrvorgängen die Auslastung eines Gaskraftwerks und damit auch die Lebensdauer eines solchen Kraftwerks. Der wirtschaftliche Betrieb ist also mitunter signifikant negativ beeinflusst.

Ein herkömmlicher flexibilisierter Betrieb eines Gasturbinenkraftwerks wird etwa durch eine geeignete Einstellung der Betriebslast in einem Bereich von etwa 40 bis 100 % der erreichbaren Nennlast ermöglicht. Dazu wird typischerweise der Brennstoffmassenstrom vermindert bzw. erhöht, wobei ggf. auch eine geeignete Verstellung der Leitschaufeln am Verdichter der Gasturbine vorgenommen werden kann, um den Brennstoffmassenstrom anzupassen und um die Anlage in geeignet angepasster Teillast zu betreiben.

Eine Erhöhung der Betriebslast über 100 % der Nennlast hinaus ist typischerweise nicht möglich bzw. nicht vorgesehen. Eine solche kann mitunter aber durch eine geeignete Einspritzung von Wasser in die Gasturbine ermöglicht werden. Hierzu kann je nach technologischer Ausführungsform Wasser in flüssiger oder bevorzugt auch in dampfförmiger Phase der Gasturbine bei Betrieb an unterschiedlichen Stellen zugegeben werden, um insbesondere einen erhöhten Massenstrom zu erreichen und damit eine erhöhte Leistung zu erzielen. Ebenfalls ist es auch möglich, Wasser in flüssiger bzw. bevorzugt in dampfförmiger Phase in den Verdichter der Gasturbine einzuführen, wobei das Wasser für eine verbesserte Kühlung der verdichteten Luft sorgt und damit der Verdichter weniger Verdichtungsarbeit zu leisten hat. Aus der Literatur sind verschiedene Fahrweisen bekannt, in welchen durch Einbringen von Wasser in die Gasturbine eine erhöhte Leistungsausbeute ermöglicht wird (bspw.: Jonsson, M., Yan, J.: Humidified gas turbines - a review of proposed and implemented cycles, Energy 30 (2005), 1013-1078).

Durch eine Wasser- bzw. Dampfeinspritzung in die Gasturbine steigt der Massenstrom durch den Expander (Turbine), wodurch die durch Gasentspannung in dem Expander abgegebene Leistung erhöht wird. Diese Wasser- bzw. Dampfeinspritzung in die Gasturbine ist auch als STIG-Konzept "Steam Injection Gas Turbine Cycle") bekannt. Eine weitere Ausführungsform ist der Cheng-Cycle. Ein solcher Betrieb weist darüber hinaus auch den Vorteil auf, dass die sich bei der Verbrennung bildenden Stickoxide nur in verhältnismäßig geringer Konzentration bilden, so dass die Abgase der Gasturbine ein geringeres Umweltschädigungspotenzial aufweisen.

Nachteilig an diesen aus dem Stand der Technik bekannten Konzepten ist jedoch, dass die der Gasturbine zugeführten Mengen an Wasser in flüssiger bzw. gasförmiger Form vorab thermisch unter zusätzlichem Aufbereitungsaufwand konditioniert werden müssen. Zudem ist zu gewährleisten, dass das Wasser auch hinsichtlich chemischer wie physikalischer Verunreinigungen geeignet aufbereitet ist. Beide Formen der Aufbereitung verursachen einen erhöhten Energieaufwand, der die Leistungsbilanz des Gasturbinenbetriebs im Gesamten vermindert. Zudem sind nach den aus dem Stand der Technik bekannten Konzepten geeignete bauliche, wie auch wartungstechnische Maßnahmen vorzusehen, um eine solche Zuführung von Wasser an eine Gasturbine weitgehend problemfrei über die Zeit der regulären Betriebs zu gestalten.

Erste Ansätze zur Lösung dieser technischen Probleme kann die DE19918346A1 vorschlagen, welche lehrt, ein Gasturbinenkraftwerk, welches einen Wasser-Dampf-Kreislauf umfasst, mit einem Behältnis als Wärmespeicher zu versehen. Das Behältnis wird mit Wasser bzw. Dampf gefüllt, der thermisch über Wärmewechselwirkung mit einem Abhitzekessel des Wasser-Dampf-Kreislaufs aufgeladen werden kann. Bei angeforderter Leistungserhöhung kann der Brennkammer bzw. anderen Teilen der von dem Gasturbinenkraftwerk umfassten Gasturbine Wasser bzw. Dampf zur Massenstromerhöhung eingespritzt werden.

Nachteilig an dieser technischen Ausführungsform ist jedoch, dass das Wasser, welches der Gasturbine zugeführt wird, mitunter flüssige Wasseranteile aufweisen kann, welche zu massiven Schäden an den inneren Bauteilen der Gasturbine führen können. Dies ist insbesondere auch der Fall, wenn der Gasturbine ausschließlich flüssiges Wasser zugeführt werden sollte. Die Zwischenspeicherung von flüssigem Wasser ist jedoch vorteilhaft, da sie erlaubt, größere Energiemengen auf kleinerem Volumen im Vergleich zu der Dampfbevorratung auf gleichem Temperaturniveau vorzuhalten. Dies verringert also den baulichen sowie den Kostenaufwand, wie auch die Betriebskosten. Sollte flüssiges Wasser in dem Behältnis vorgehalte werden, schlägt die DE19918346A1 vor, dieses Behältnis gegen ein größeres System zu öffnen und das Behältnis als Gefällespeicher zu betreiben. Dies sorgt jedoch für einen signifikanten Energieverlust, da das Wasser in dem gesamten Behältnis entspannt wird und wesentliche Teile der Energie ungenutzt verloren gehen. Weiterhin kann der Dampfdruck nicht ausreichend genau und individuell eingestellt werden, da dieser von den Druckverhältnissen des größeren Systems abhängig ist.

Auch das Patent US 5,404,708 kann hierzu keine Hinweise für eine bessere technische Lösung geben, da auch dort lediglich flüssiges Wasser in einem Speicher vorgehalten wird, aus welchem bei Bedarf dieses nicht weiter behandelt entnommen werden kann, um es einer Gasturbine zuzuführen.

Der vorliegenden Erfindung liegt somit die Aufgabe zugrunde, die aus dem Stand der Technik bekannten Nachteile zu vermeiden und eine verbesserte Zuführung von Wasser an die Gasturbine eines Gasturbinenkraftwerks vorzuschlagen. Insbesondere soll die Erfindung gewährleisten, dass die Flexibilisierung des Gasturbinenkraftwerks verbessert ist, wobei auch Wasser in flüssiger Form vorgehalten werden können soll, welches bei Bedarf zur Leistungssteigerung einer Gasturbine zugegeben werden kann, ohne dass jedoch Schäden durch Tröpfchenbildung an inneren Bauteilen der Gasturbine zu befürchten stehen.

Gleichzeitig soll ein solcher Betrieb auch energetisch vorteilhaft möglich sein.

Erfindungsgemäß werden diese der Erfindung zugrundeliegenden Aufgaben durch ein Gasturbinenkraftwerk gemäß Anspruch 1 sowie durch ein Verfahren zum flexiblen Betrieb eines solchen vorab, wie auch nachfolgend beschriebenen Gasturbinenkraftwerks gemäß Anspruch 11 gelöst.

Insbesondere werden diese der Erfindung zugrundeliegenden Aufgaben gelöst durch ein Gasturbinenkraftwerk, welches folgendes umfasst: eine Gasturbine, welche einen Verdichter, eine Brennkammer und einen Expander aufweist, weiterhin umfassend einen Wasser-Dampf-Kreislauf, welcher wärmetechnisch mit der Gasturbine derart verschaltet ist, dass bei Betrieb der Gasturbine das aus dieser abgeleitete Abgas Wärme an den Wasser-Dampf-Kreislauf zur Dampferzeugung überträgt, wobei der Wasser-Dampf-Kreislauf weiter mit einem Wärmespeicher wärmetechnisch verschaltet ist, der seinerseits wieder mit einem Behältnis zur Bevorratung von Wasser wärmetechnisch verschaltet ist, und wobei das Behältnis fluidtechnisch mit der Gasturbine, insbesondere mit der Brennkammer der Gasturbine derart gekoppelt ist, dass Wasser aus dem Behältnis der Gasturbine bei Betrieb derselben zur Leistungserhöhung zugeführt werden kann, wobei zwischen Behältnis und Gasturbine ein Flash-Ventil geschaltet ist, welches dazu ausgebildet ist, das aus dem Behältnis entnommene Wasser auf ein geringeres Druckniveau zu entspannen.

Weiterhin werden die der Erfindung zugrundeliegenden Aufgaben gelöst durch ein Verfahren zum flexiblen Betrieb eines Gasturbinenkraftwerks gemäß einer der vorab wie nachfolgend dargestellten Ausführungsformen, welches Verfahren folgende Schritte umfasst:
- Betreiben der Gasturbine und Ableitung des Abgases aus dieser, sowie Wärmeübertragung an den Wasser-Dampf-Kreislauf zur Dampferzeugung;
- Übertragen von Wärme aus dem Wasser-Dampf-Kreislauf an den Wärmespeicher;
- Übertragung von Wärme aus dem Wärmespeicher an das Behältnis;
- Übertragen von Wasser aus dem Behältnis an die Gasturbine, insbesondere an die Brennkammer der Gasturbine zur Leistungserhöhung bei Betrieb der Gasturbine.

Erfindungsgemäß ist es also möglich, Wärme bzw. sogar Wasser aus dem Wasser-Dampf-Kreislauf zu entnehmen, und einem Wärmespeicher, der mit dem Wasser-Dampf-Kreislauf wärmetechnisch verschaltet ist zuzuführen. Die Wärme bzw. das Wasser wird hierbei in dem Wärmespeicher zwischengespeichert, und kann zu einem nachfolgenden Zeitpunkt vorteilhaft entnommen werden, um nämlich etwa Wasser wärmetechnisch aufzubereiten bzw. aufbereitet zu haben, welches anschließend der Gasturbine zur Leistungserhöhung bei Betrieb zugeführt wird.

Das betreffende Wasser befindet sich in einem Behältnis, welches wärmetechnisch bzw. sogar fluidtechnisch mit dem Wärmespeicher verschaltet ist. Insofern kann die Wärme aus dem Wärmespeicher an das Behältnis vorteilhaft übertragen werden. Das Behältnis kann nun seinerseits Wasser in geeigneter Qualität aufweisen, so dass eine weitere physikalische und chemische Aufbereitung dieses Wasser vor Zuführung an die Gasturbine zur Leistungserhöhung bei Betrieb nicht mehr erforderlich ist. Vorteilhaft wird dieses Wasser aus anderen Kraftwerksprozessen entnommen, so dass keine zusätzliche Aufbereitung mehr erforderlich ist. Das in dem Behältnis bevorratete Wasser wird mitunter lediglich thermisch konditioniert, wobei die zur Aufbereitung erforderliche Wärme bspw. aus dem Wasser-Dampf-Kreislauf entnommen werden kann.

Ebenfalls ist es möglich, wie nachfolgend noch ausgeführt werden wird, dass der Wärmespeicher das Behältnis zur Bevorratung von Wasser umfasst, so dass die Zuführung von Wasser aus dem Wasser-Dampf-Kreislauf direkt in das Behältnis des Wärmespeichers möglich sein kann. Demgemäß ist auch ein geringerer baulicher Aufwand erforderlich. Alternativ oder auch zusätzlich kann der Wärmespeicher mit dem Behältnis zur Bevorratung von Wasser auch mittels geeigneter Wärmeübertrager thermisch gekoppelt sein, so dass ein geeigneter Wärmeübertrag erfolgen kann, ohne dass jedoch ein Fluidübertrag erfolgen muss.

Die vorliegende Erfindung ermöglicht also die Zwischenspeicherung von Wärme aus dem Wasser-Dampf-Kreislauf sowie eine zeitlich spätere Entnahme dieser Wärme aus dem Wärmespeicher, etwa dann wenn das Gasturbinenkraftwerk eine erhöhte Leistung aufgrund vermehrter Nachfrage aus den öffentlichen Stromversorgungsnetzwerken erfährt. Das Gasturbinenkraftwerk kann insofern verbessert flexibel eingesetzt werden. Dies betrifft jedoch nicht nur die zeitliche Flexibilität des Gasturbinenkraftwerks, sondern auch die energetische Flexibilität, da insbesondere die Auskopplung von thermischer Energie aus dem Wasser-Dampf-Kreislauf in geringen Mengen, wie weiter unten noch ausgeführt werden wird, nicht zu einer signifikanten Leistungseinbuße bei der Stromerzeugung durch das Gasturbinenkraftwerk führt.

Entsprechend eines weiteren Aspekts der Erfindung ist vorgesehen, dass zwischen Behältnis und Gasturbine ein Flash-Ventil geschaltet ist, welches dazu ausgebildet ist, das aus dem Behältnis entnommene Wasser auf ein geringeres Druckniveau zu entspannen. Das Flash-Ventil ist insbesondere dazu ausgebildet, Wasserdampf abzutrennen, um diesen ohne einen ebenfalls abgeschiedenen flüssigen Anteil des so entspannten Wassers der Gasturbine gezielt zuzuführen. Beim Entspannen von flüssigem und thermisch behandeltem Wasser über ein Flash-Ventil wird das Druckniveau erniedrigt, wobei eine teilweise Verdampfung und Abkühlung eintritt. Durch die Entspannung wird Dampf auf einem relativ niedrigerem Druckniveau bereitgestellt. Das dabei abgetrennte Wasser in flüssiger Phase kann beispielsweise mit Make-up-Wasser vermischt und anschließend etwa durch eine Pumpe in einen Vorlagenbehälter befördert werden, welcher wieder auf einem höherem Druckniveau stehen kann. Folglich kann auch in dem erfindungsgemäßen Behältnis flüssiges und thermisch aufbereitetes Wasser vorgehalten werden, ohne befürchten zu müssen, dass bei Zugabe an die Gasturbine ein Schadensfall aufgrund von Tröpfchenbildung erfolgt. Gleichzeit kann thermische Energie auf einem deutlich kleinerem Behältnisvolumen im Vergleich zur Dampfbevorratung vorgehalten werden, welcher eine geringere Energiedichte bei gleicher Temperatur aufweist.

Die Erfindung ermöglicht somit eine verbesserte Flexibilisierung eines Gasturbinenkraftwerks unter Verwendung herkömmlicher Komponenten sowie beherrschbarer Verfahrensschritte. Dadurch ist eine Erweiterung des Leistungs- und Effizienzbereichs des Gasturbinenkraftwerks ermöglicht, indem etwa durch Dampfentnahme die Leistungserniedrigung, wie auch bei entsprechender Zugabe von Wasser an die Gasturbine eine Leistungserhöhung erfolgen kann. Insbesondere bei einer Leistungserhöhung aufgrund der Zuführung von Wasser an die Gasturbine kann somit auch der Teillastwirkungsgrad verbessert werden.

Ebenso kann etwa bei gleicher elektrischer Abgabeleistung durch das Gasturbinenkraftwerk auch eine Reduktion des Brennstoffverbrauchs ermöglicht werden, wenn etwa Wasser der Gasturbine zur Leistungssteigerung zugeführt wird. Insbesondere durch eine zeitlich verzögerte Entnahme der thermischen Energie aus dem Wärmespeicher kann auch dann mehr Leistung durch das Gasturbinenkraftwerk zu einem anderen Zeitpunkt geliefert werden, nämlich dann, wenn etwa das Gasturbinenkraftwerk vermehrt Regelleistung bereitstellen muss. Hierbei ist darauf hinzuweisen, dass bei Zufuhr von Wasser an die Gasturbine zur Leistungserhöhung bei Betrieb auch eine Spitzenlasterzeugung von deutlich über der Nennlast von 100 % hinaus erreichbar ist.

Gemäß einer ersten besonders bevorzugten Ausführungsform der Erfindung ist vorgesehen, dass der Wärmespeicher das Behältnis umfasst, bzw. dieses ist. Insofern kann beispielsweise dem Wasser-Dampf-Kreislauf Wasser bei vorherrschendem Druck und Temperaturniveau entnommen werden, wobei dieses direkt in das Behältnis zur Zwischenspeicherung überführt wird. Ganz besonders bevorzugt erfolgt die Überführung bei erhöhtem Druck, der über dem benötigten Druck an der Einspeisestelle der Gasturbine liegt. Im einfachsten konstruktiven Fall, kann der Wärmespeicher auch durch das Behältnis ersetzt sein. Muss nun bei einem späteren Einsatz die Gasturbine des Gasturbinenkraftwerks vermehrt Leistung bereitstellen, kann das Wasser aus dem Behältnis entnommen werden, wobei es in geeigneter Form der Gasturbine des Gasturbinenkraftwerks zur Leistungssteigerung zugeführt wird.

Demgemäß kann das in dem Wasser-Dampf-Kreislauf geführte Wasser direkt nach geeigneter Zwischenspeicherung der Gasturbine zur Leistungssteigerung bereit gestellt werden. Das in dem Wasser-Dampf-Kreislauf befindliche Wasser weist jedoch aufgrund der hohen Prozessanforderungen auch eine hohe und damit ausreichende Reinheit auf, um einer Gasturbine zur Leistungssteigerung zugeführt zu werden. Insofern erfordert das in dem Behältnis zwischengespeicherte Wasser keine weiteren Aufreinigungsschritte mehr, bevor es der Gasturbine direkt zugeführt werden kann. Dies wiederum vermindert die Anzahl der energieaufwändigen Schritte zur Reinigung und thermischen Aufbereitung. Dies ist besonders vorteilhaft. Weiterhin vermindert diese Ausführungsform auch die Anzahl der baulich erforderlichen Komponenten, wodurch der Investitionsaufwand zur Bereitstellung dieser ausführungsgemäßen Form des Gasturbinenkraftwerks im Vergleich zu anderen Formen vermindert sein kann. Zudem erweist es sich als besonders vorteilhaft, dass das aus dem Wasser-Dampf-Kreislauf entnommene Wasser bereits eine geeignete thermische, wie auch hinsichtlich des Druckniveaus drucktechnische Konditionierung aufweist, so dass auch die Überführung von Wasser aus dem Behältnis zur Gasturbine keine weitere drucktechnische Aufbereitung mehr erfordert. Auch dies ist wiederum besonders vorteilhaft.

Gemäß einer weiteren, besonders vorteilhaften Ausführungsform der Erfindung umfasst der Wasser-Dampf-Kreislauf einen Abhitzedampferzeuger, der mit dem Wärmespeicher wärmetechnisch bzw. fluidtechnisch verschaltet ist. Hierbei ist darauf hinzuweisen, dass aufgrund der fluidtechnischen Verschaltung auch eine wärmetechnische Verschaltung resultiert, da das thermische Energie aufweisende Fluid geeignet ausgetauscht werden kann. Die wärmetechnische wie auch die fluidtechnische Verschaltung kann bevorzugt im Bereich eines Mitteldruckabschnitts (typischer Druckbereich 15-40 bar, sog. MitteldruckNiveau) bzw. eines Hochdruckabschnitts (typischer Druckbereich über 70 bar, sog. Hochdruckniveau) des Abhitzedampferzeugers erfolgen. Hierzu kann aus dem Mitteldruckabschnitt bzw. dem Hochdruckabschnitt entnommene Wärme bzw. entnommenes Fluid geeignet in den Wärmespeicher bzw. das Behältnis überführt werden, so dass Wärme bzw. Fluid auf einem geeigneten Druck- bzw. Temperaturniveau vorliegt.

An dieser Stelle sei auch darauf hingewiesen, dass das vorab beschriebene Fluid, soweit nicht anders angegeben, Wasser in seinen natürlich vorkommenden physikalischen Phasen ist. Hierbei liegen je nach Temperatur und Druckniveau entweder flüssiges Wasser, dampfförmiges Wasser oder auch andere Aggregatzustände vor.

Gemäß einer weiteren Ausführungsform der Erfindung ist vorgesehen, dass der Wasser-Dampf-Kreislauf eine Dampfturbine aufweist, die mit dem Wärmespeicher wärmetechnisch bzw. fluidtechnisch verschaltet ist. Insbesondere wenn die Dampfturbine einen Satz bei unterschiedlichen Druckniveaus sowie bei unterschiedlichen Temperaturen betrieben Einzelturbinen aufweisen. Gemäß einer solchen Ausführungsform erweist es sich dann als vorteilhaft, Wasser von geeignetem Druckniveau und geeigneter Temperatur aus der Dampfturbine bzw. aus den Einzelturbinen abzuzweigen, um diesem Wärme zu entnehmen bzw. um dieses für eine spätere Zuführung an die Gasturbine zur Leistungssteigerung vorzuhalten. Vor allem bei Abzweigung von Wasser im Bereich einer Mitteldruckturbine weist das Wasser geeignete Druck und Temperaturniveaus auf, die eine direkte Zuführung des entnommenen Wassers an die Gasturbine zur Leistungssteigerung nach Zwischenspeicherung besonders vorteilhaft erscheinen lassen.

Entsprechend eines weiteren vorteilhaften Aspekts der Erfindung ist vorgesehen, dass der Wasser-Dampf-Kreislauf und der Wärmespeicher nicht nur wärmetechnisch sondern auch fluidtechnisch verschaltet sind. Ein Austausch von Fluid ermöglicht damit auch gleichzeitig einen einfachen Austausch an Wärme, wie weiter oben bereits erklärt. Eine fluidtechnische Verschaltung ist damit konstruktionstechnisch besonders vorteilhaft.

Gemäß einer Weiterführung dieser Ausführungsform ist vorgesehen, dass zwischen dem Wasser-Dampf-Kreislauf und dem Wärmespeicher ausgetauschtes Wasser in dem Behältnis zwischengespeichert werden kann. Dies ermöglicht eine Entnahme von, wie weiter oben bereits ausgeführt, gereinigtem Wasser aus dem Wasser-Dampf-Kreislauf, welches für die zeitlich verzögerte spätere Zuführung des Wassers an die Gasturbine zur Leistungssteigerung nicht mehr zusätzlich aufwändig aufbereitet werden muss. Das aus dem Wasser-Dampf-Kreislauf entnommene Wasser kann vielmehr in dem Behältnis zeitlich zwischengespeichert werden, wobei bei erforderlicher Leistungssteigerung das Wasser in geeigneten Mengen und bei geeigneten physikalischen Bedingungen der Gasturbine direkt zugeführt werden kann.

Ebenfalls im Sinne einer Weiterführung bzw. einer alternativen Ausführungsform kann auch vorgesehen sein, dass die fluidtechnische Verschaltung zwischen Wasser-Dampf-Kreislauf und Wärmespeicher am Wasser-Dampf-Kreislauf an einem Ort vorgenommen ist, an welchem bei regulärem Betrieb des Gasturbinenkraftwerks ein Dampfdruck besteht, der wenigstens den Druck in der Brennkammer der Gasturbine bei regulärem Betrieb entspricht. Insbesondere beträgt dieser Entnahmedruck im Wasser-Dampf-Kreislauf 5 bis 35 bar, wobei der Brennkammerdruck in der Brennkammer, soweit das Wasser der Gasturbine über die Brennkammer zugeführt wird, geringer ist. Ein typischer Druckbereich von 4 bis 20 bar kann in der Brennkammer bei Betrieb der Gasturbine vorherrschen. Ausführungsgemäß weist also das aus dem Wasser-Dampf-Kreislauf entnommene Wasser einen höheren Druck auf, bzw. wenigstens denselben Druck, welcher in der Brennkammer der Gasturbine vorherrscht. Damit muss das der Gasturbine zur Leistungssteigerung zugeführte Wasser drucktechnisch nicht mehr aufbereitet werden. Zudem kann eine energetisch besonders vorteilhafte Einspritzung des bei einem solchen Druckniveau vorliegenden Wassers in die Brennkammer der Gasturbine erreicht werden. Ist der Druck, bei welchem das aus dem Wasser-Dampf-Kreislauf entnommene Wasser in dem Behältnis bevorratet wird, deutlich größer als etwa der Brennkammerdruck der Brennkammer der Gasturbine, kann auch eine Bevorratung des so zwischengespeicherten Wassers über längere Zeit möglich sein, ohne dass auch bei späterer Zuführung an die Gasturbine eine energetisch aufwändige Druckkonditionierung vorgenommen werden müsste.

Gemäß einer weiteren besonders bevorzugten Ausführungsform, die auch als Weiterführung vorgesehen sein kann, ist vorgesehen, dass die fluidtechnische Verschaltung zwischen Wasser-Dampf-Kreislauf und Wärmespeicher am Wasser-Dampf-Kreislauf an einem Abhitzedampferzeuger vorliegt, insbesondere im Bereich eines Mitteldruckabschnitts des Abhitzedampferzeugers. Durch geeignete Entnahme von Wasser im Bereich des Abhitzedampferzeugers kann Wasser auf mitunter verschiedenen Temperatur- sowie Druckniveaus entnommen werden, so dass dieses auch nachfolgend einer möglichen Mischung verschiedener Anteile mit verschiedenen Drücken und verschiedenen Temperaturniveaus geeignet für den Betrieb des ausführungsgemäßen Gaskraftwerks zugeführt werden kann. Zudem verminderte eine Entnahme von Wärme im Bereich des Mitteldruckabschnitts nicht die mit dem Gasturbinenkraftwerk erzielbare Leistung in einem derartig großen Maße, wie wenn Wasser etwa im Bereich eines Hochdruckabschnitts entnommen würde.

Entsprechend einer weiteren besonders bevorzugten Ausführungsform der Erfindung ist vorgesehen, dass das Behältnis als Druckwasserbehältnis ausgeführt ist. Insofern kann das aus dem Wasser-Dampf-Kreislauf entnommene Wasser etwa dem Druckwasserbehältnis direkt zugeführt werden, um dort im Sinne eines Wärmespeichers zeitlichen zwischengespeichert zu werden. Anschließend steht das so zwischengespeicherte Wasser wieder bei einem geeigneten Druck und bei einem geeigneten Temperaturniveau für die Zuführung zur Gasturbine zur Leistungssteigerung zur Verfügung. Im Druckbehältnis, welches Wasser bei erhöhter Temperatur und erhöhtem Druck enthält, liegt typischerweise ein Zweiphasengemisch von Wasser in flüssiger Form und Wasserdampf vor. Die Entnahme von Wasserdampf, der dann der Gasturbine zugeführt wird, kann auch an der oberen Seite des Druckbehältnisses erfolgen. Durch die Entnahme von Wasserdampf kommt es dann zu einer Nachverdampfung innerhalb des Druckbehältnisses, wodurch die Temperatur und der Druck im Druckbehältnis sinkt. Durch die Entnahme von Wasserdampf kommt es daher zu einer Entladung des Wärmespeichers.

Entsprechend einer weiteren Ausführungsform der Erfindung ist vorgesehen, dass der Wärmespeicher als sensibler Wärmespeicher und/oder als latenter Wärmespeicher und/oder als thermo-chemischer Wärmespeicher ausgebildet ist. Diese Formen der Wärmespeicher ermöglichen kostengünstig und ohne große Investitionskosten einen geeigneten Wärmespeicher bereitzustellen.

Gemäß einer ersten besonders bevorzugten Ausführungsform des erfindungsgemäßen Verfahrens ist vorgesehen, dass der Schritt des Übertragens von Wärme aus dem Wasser-Dampf-Kreislauf an den Wärmespeicher von dem Schritt des Übertragens von Wärme aus dem Wärmespeicher an das Behältnis mit umfasst ist. Insofern kann die Wärme aus dem Wasser-Dampf-Kreislauf dem Wärmespeicher direkt zugeführt werden, indem dem Behältnis etwa Wasser aus dem Wasser-Dampf-Kreislauf zur Zwischenspeicherung zugeleitet wird.

Weiterhin ist besonders bevorzugt, dass der Schritt des Übertragens von Wasser aus dem Behältnis an die Gasturbine im Vergleich zu den anderen Schritten zeitlich nachfolgend erfolgt, insbesondere zu einer Zeit der erhöhten Leistungsabgabe der Gasturbine bei erhöhter Nachfrage nach elektrischer Leistung aus einem Stromversorgungsnetzwerk. Insofern wird das Gasturbinenkraftwerk bevorzugt dann mit Wasser aus dem Behältnis zur Leistungssteigerung versorgt, wenn erhöhte Nachfrage nach elektrischer Leistung aus dem Stromversorgungsnetzwerk vorliegt. Dies ist insbesondere dann der Fall, wenn etwa die erneuerbaren Energiequellen nicht ausreichend elektrische Energie zur Verfügung stellen können.

Nachfolgend soll die Erfindung anhand von einzelnen beispielhaften Ausführungsformen, wie sie in den Figuren wiedergegeben sind, erklärt werden. Hierbei sei darauf hingewiesen, dass die in den Figuren gezeigten Ausführungsformen lediglich schematisch zu verstehen sind, und keine Einschränkung hinsichtlich der Ausführbarkeit der Erfindung darstellen.

Weiterhin sei darauf hingewiesen, dass die mit gleichen Bezugszeichen versehenen Bauteile eine vergleichbare technische Wirkung aufweisen.

Ebenfalls soll darauf hingewiesen werden, dass die Erfindung entsprechend der nachfolgend dargestellten Ausführungsformen, wie auch in beliebiger Kombination einzelner Bauteile daraus bzw. Baugruppen dieser Ausführungsformen beansprucht werden, soweit diese Kombination unter die vorliegende Erfindungsidee zu rechnen ist.

Hierbei zeigen:
- FIG 1: eine erste Ausführungsform der Erfindung in schematischer Schaltansicht.
- FIG 2: eine weitere Ausführungsform der Erfindung in schematischer Schaltansicht;
- FIG 3: eine weitere Ausführungsform der Erfindung in einer schematischen Funktionsansicht;
- FIG 4: eine graphische Darstellung der Veränderung der Abgabeleistung eines ausführungsgemäßen Gasturbinenkraftwerks sowie der damit einher gehenden Veränderung der entnommenen Wärmemenge in Abhängigkeit der auf einem Mitteldruckniveau entnommenen Dampfmenge.
- FIG 5: eine graphische Darstellung der Veränderung der Abgabeleistung eines ausführungsgemäßen Gasturbinenkraftwerks sowie der damit einher gehenden Veränderung der aufgenommenen Wärmemenge in Abhängigkeit der der Gasturbine zugeführten Dampfmenge.
- FIG 6: eine erste Ausführungsform des erfindungsgemäßen Verfahrens in Flussdiagramm-Ansicht.

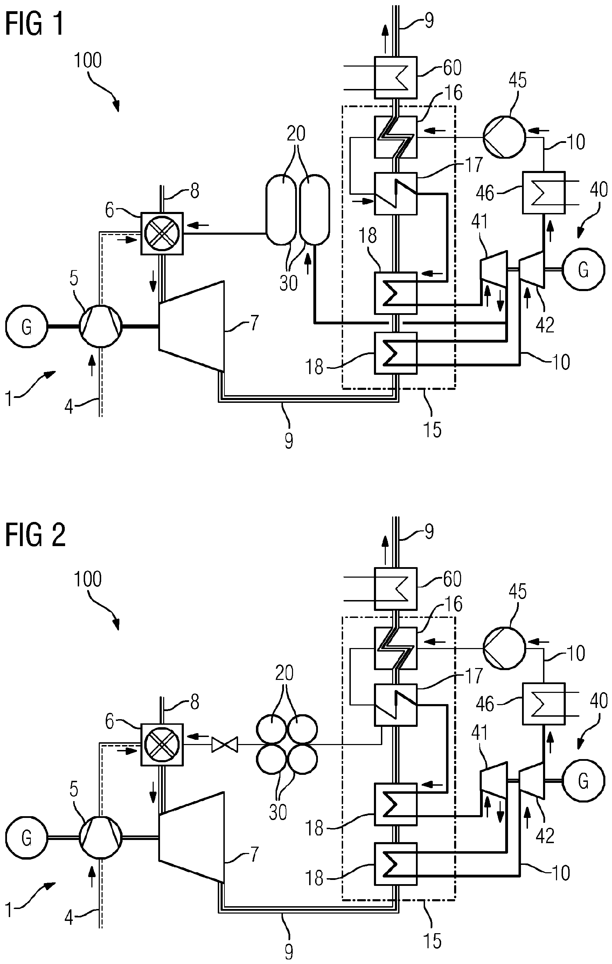

FIG 1 zeigt eine schematische Schaltansicht einer ersten Ausführungsform eines erfindungsgemäßen Gasturbinenkraftwerks 100. Es umfasst eine Gasturbine 1, die ihrerseits wiederum einen Verdichter 5 (Kompressor), eine Brennkammer 6 sowie einen Expander 7 (Turbine) aufweist. Bei Betrieb der Gasturbine 1 wird Luft 4 durch den Verdichter 5 angesaugt und auf ein erhöhtes Druckniveau verdichtet. Diese so verdichtete Luft 4 wird der Brennkammer 6 zur Verbrennung von Brennstoff 8 zugeführt. Aufgrund der Verbrennungsbedingungen in der Brennkammer 6 stellt sich ein betriebsspezifisches Druck- wie auch Temperaturniveau ein. Das Abgas dieser Verbrennung wird dem Expander 7 zugeführt, in welchem eine thermische Entspannung erfolgt, wobei gleichzeitig die Arbeitsleistung des sich entspannenden Gases in geeigneter Form zur Stromerzeugung mittels des Generators (G) genutzt wird.

Das aus der Gasturbine abgeleitete Abgas 9 wird ausführungsgemäß einem Abhitzedampferzeuger 15 zugeleitet, der eine Anzahl verschiedener Konditionierabschnitte 16, 17, 18 aufweist. Hierbei gibt das Abgas 9 seine Wärme bei Durchströmen des Abhitzedampferzeugers 15 zunächst an zwei in Reihe geschaltete Konditionierabschnitte 18, die als Überhitzer ausgebildet sind, ab, anschließend an einen Konditionierabschnitt 17, der als Verdampfer ausgebildet ist, sowie daran anschließend an einen Konditionierabschnitt 16, der als Economizer ausgebildet ist.

Die drei Konditionierabschnitte 16, 17, 18 sind, wie der gesamte Abhitzedampferzeuger 15, von einem Wasser-Dampf-Kreislauf 10 umfasst, der auch zur Stromerzeugung eine Dampfturbine 40 aufweist. Die Dampfturbine 40 weist ihrerseits eine Niederdruckturbine 42 sowie eine Hochdruckturbine 41 auf, die geeignet gekoppelt sind und jeweils bzw. zusammen einen Generator (G) zur Stromerzeugung antreiben können.

Zur Unterstützung bzw. zur Erzeugung der Strömung des in dem Wasser-Dampf-Kreislauf 10 geführten Wassers, kann der Wasser-Dampf-Kreislauf 10 zudem eine Pumpe 45 aufweisen. Zudem weist der Wasser-Dampf-Kreislauf 10 in Bezug auf die Dampfturbine 40 stromabwärts einen Kondensator 46 auf.

Nach erfolgter Wärmeübertragung aus dem Abgas 9 der Gasturbine 1 bei Durchströmen des Abhitzedampferzeugers 15 kann beispielsweise zur Wasserrückgewinnung aus dem Abgas 9 stromabwärts im Bezug auf den Abhitzedampferzeuger 15 ein weiterer Kondensator 60 vorgesehen sein, der zudem einen geeigneten Auffangbehälter für das abgeschiedene Wasser aufweist.

Ausführungsgemäß wird dem Wasser-Dampf-Kreislauf 10 zudem Wasser bzw. Wärme entnommen, das bzw. die einem Wärmespeicher 20 zugeführt werden kann. Das Wasser bzw. die Wärme wird ausführungsgemäß zwischen der Hochdruckturbine 41 und der Niederdruckturbine 42 des Wasser-Dampf-Kreislaufs 10 entnommen. Je nach Ausführungsform kann die Entnahme von Wärme mittels eines nicht weiter gezeigten Wärmetauschers erfolgen, bzw. die Entnahme von Wasser direkt durch eine geeignete Abzweigleitung. Die Wärme bzw. das Wasser werden dem Wärmespeicher 20 zugeführt, der ausführungsgemäß ebenfalls ein Behältnis 30 umfasst, welches für die Bevorratung von Wasser geeignet ist. Insbesondere ist das Behältnis 30 geeignet, um Wasser aus dem Wasser-Dampf-Kreislauf 10 unter Druck und temperaturisoliert zwischenzuspeichern, wobei somit die in dem Wasser befindliche Wärme gleichzeitig in dem Wärmespeicher 20 zwischengespeichert werden kann. Beispielsweise kann etwa Wasser auf einem Druckniveau von 30 bar nach der Hochdruckturbine 41 der Dampfturbine 40 entnommen und in dem Behältnis 30 des Wärmespeichers 20 unter diesem Druck zwischengespeichert werden.

Ist nun eine erhöhte Leistungsanfrage aus den öffentlichen Stromversorgungsnetzwerken vorliegend, kann das Wasser aus dem Behältnis 30 entnommen und der Brennkammer 6 der Gasturbine 1 zugeführt werden. Alternativ ist beispielsweise auch eine Zuführung des Wassers an den Verdichter 5 möglich. Ausführungsgemäß wird bei Betrieb der Gasturbine 1 die Brennkammer 6 bei einem Druckniveau von etwa 20 bar betrieben. Wird das aus dem Wasser-Dampf-Kreislauf 10 entnommene Wasser etwa auf einem Druckniveau von 30 bar entnommen und in dem Behältnis 30 zwischengespeichert, steht zu einem späteren Zeitpunkt auch nach möglichen energetischen Verlusten während des Speicherzeitraums Wasser auf einem Druckniveau zur Verfügung, welches wenigstens dem Brennkammerdruckniveau in der Brennkammer 6 entspricht. Vor Zuleitung an die Brennkammer 6 soll das Wasser noch über ein nicht weiter gezeigtes Flash-Ventil entspannt werden, so dass eine vorteilhafte Phasentrennung des Wassers erfolgen kann und lediglich Wasserdampf der Gasturbine 1 zugeleitet wird.

Die Entnahme von Wasser aus dem Wasser-Dampf-Kreislauf 10 nach der Hochdruckturbine 41, wie gezeigt, ist jedoch nur eine von zahlreichen vielen Möglichkeiten, um Wasser bei geeigneter Temperatur und geeignetem Druckniveau für die spätere weitere Verwendung zur Leistungssteigerung der Gasturbine 1 zu entnehmen. Bei einem sog. Drei-Druck-Kessel, eignet sich beispielsweise eine Entnahme von Dampf nach der Hochdruckturbine, bei einem Zwei-Druck-Kessel, kann beispielsweise Dampf zwischen der Hochdruck- und einer Niederdruckturbine entnommen werden. Es ist auch die direkte Entnahme von Wasser in flüssiger Form aus Dampftrommeln bei verschiedenen Druckniveaus möglich.

FIG 2 zeigt eine weitere Ausführungsform des erfindungsgemäßen Gasturbinenkraftwerks 100, welches sich von der in FIG 1 gezeigten Ausführungsform lediglich darin unterscheidet, dass die aus dem Wasser-Dampf-Kreislauf 10 entnommene Wärme bzw. das aus dem Wasser-Dampf-Kreislauf 10 entnommene Wasser im Bereich eines Verdampfers 17 bzw. einer Dampftrommel des Abhitzedampferzeugers 15 entnommen und dem Wärmespeicher 20 zugeführt wird. Das entnommene Wasser kann beispielsweise Heißwasser auf einem Druckniveau von 25-35 bar sein. Dieses Heißwasser wird wiederum zur geeigneten Wärmeentnahme in dem Wärmespeicher 20 bevorratet. Ganz besonders bevorzugt ist eine Ausführungsform des Wärmespeichers 20, bei welcher das Behältnis 30 von dem Wärmespeicher 20 umfasst wird, so dass aus dem Wasser-Dampf-Kreislauf 10 entnommenes Wasser in dem Behältnis 30 zur Wärmespeicherung bevorratet werden kann. Eine Entnahme des Wassers am Abhitzedampferzeuger 15 kann beispielsweise an der Dampftrommel erfolgen.

Vorteilhaft an dieser Ausführungsform ist, dass das Behältnis 30 etwa vergleichbar zu einer Dampftrommel ausgebildet sein kann, weshalb dieses Bauteil ohne weitere Entwicklungskosten und leicht bereitgestellt werden kann. Weiterhin ist vorgesehen, dass vor Zuleitung an die Brennkammer 6 das Wasser noch über ein nicht weiter gezeigtes Flash-Ventil entspannt wird, so dass eine vorteilhafte Phasentrennung des Wassers erfolgen kann und lediglich Wasserdampf der Gasturbine 1 zugeleitet wird.

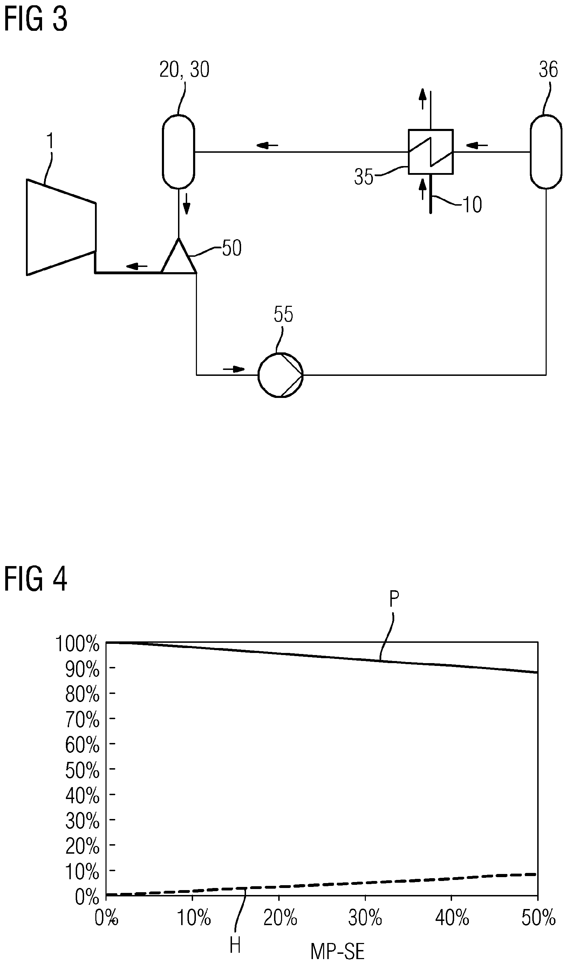

FIG 3 zeigt eine weitere Ausführungsform der Erfindung in schematischer Funktionsansicht. Ausführungsgemäß wird Wärme aus dem Wasser-Dampf-Kreislauf 10 entnommen, und in dem Wärmespeicher 20 zwischengespeichert. Der Wärmespeicher 20 umfasst wiederum das Behältnis 30 zur Zwischenspeicherung von Wasser, welches Wasser bei Bedarf der Gasturbine 1 zugeleitet werden kann. Das Behältnis 30 ist beispielsweise als Druckwasserspeicher ausgebildet.

Der Wärmetauscher 35 dient hierbei zur thermischen Kopplung des Wasser-Dampf-Kreislaufs 10 mit einem weiteren Kreislauf (vorliegend nicht mit Bezugszeichen versehen), in welchen das Behältnis 30 bzw. der Wärmespeicher 20 verschaltet ist, und welcher ebenfalls Wasser als Kreislaufmedium aufweist. Bei Betrieb kann etwa die Wärme aus Dampf bzw. überhitztem Dampf aus einer Mitteldruckturbine bzw. aus einem Mitteldruckabschnitt des Abhitzedampferzeugers 15 genutzt werden, wobei diese Wärme auf Wasser in den Kreislauf eingebracht wird, in welchen das Behältnis 30 bzw. der Wärmespeicher 20 geschaltet ist. Das so konditionierte Wasser wird vor Entspannung mittels eines Flash-Ventils 50 in dem Behältnis 30 bzw. dem Wärmespeicher 20 zwischengespeichert. Nach der Entspannung des Wassers über das Flash-Ventil 50 erfolgt eine Druckerniedrigung und Abkühlung durch Verdampfung. Hierbei kann beispielsweise Dampf auf einem Druckniveau von 20 bar für die Zuleitung an die Gasturbine 1 gezielt entnommen werden. Das bei der Entspannung mittels des Flash-Ventils 50 gleichzeitig anfallende flüssige Wasser kann beispielsweise bei dem gleichen Druckniveau von 20 bar wiederum an einen weiteren Speicher 36 zurück geführt werden. Hierbei kann das so zurückgeführte flüssige Wasser mit weiterem Make-up-Wasser vermischt werden.

Ausführungsgemäß kann also Wärme aus dem Wasser-Dampf-Kreislauf 10 mittels dem Wärmeüberträger 35 auf ein Kreislaufspeichermedium, vorliegend Wasser, überführt werden, welches dann in dem Behältnis 30 bzw. dem Wärmespeicher 20 zwischengespeichert werden kann. Ausführungsgemäß kann Wasser so auch auf eine Temperatur erhitzt werden, die sehr nahe an der Verdampfungstemperatur liegt. Das so konditionierte Druckwasser wird anschließend zur weiteren Entnahme in dem Behältnis 30 bzw. dem Wärmespeicher 20 bevorratet. Alternativ hierzu kann auch das aus einem Mitteldruckabschnitt entnommene Wasser direkt in geeigneten Druckbehältern 30 des Wärmespeichers 20 zur weiteren Entnahme zwischengespeichert werden.

Die Entnahme von Wärme bzw. von Wasser aus dem Wasser-Dampf-Kreislauf 10 bzw. aus dem Abhitzedampferzeuger 15 beeinflusst den Betrieb des Gasturbinenkraftwerks 100, insbesondere die elektrische Abgabeleistung. Um diesen Grad der Beeinflussung näher zu verdeutlichen, wurden von der Anmelderin beispielhaft geeignete Kreislaufsimulationen durchgeführt. Als Grundlage für die Kreislaufsimulationen diente ein Gasturbinenkraftwerk 100, wie es beispielsweise in FIG 1 und 2 dargestellt wurde. Hierbei hat sich gezeigt, dass bei zunehmender Entnahme von Wasser (Dampf) aus dem Wasser-Dampf-Kreislauf 10 die Leistung P des Gasturbinenkraftwerks absinkt. Dieses Verhalten ist in Fig. 4 näher dargestellt.

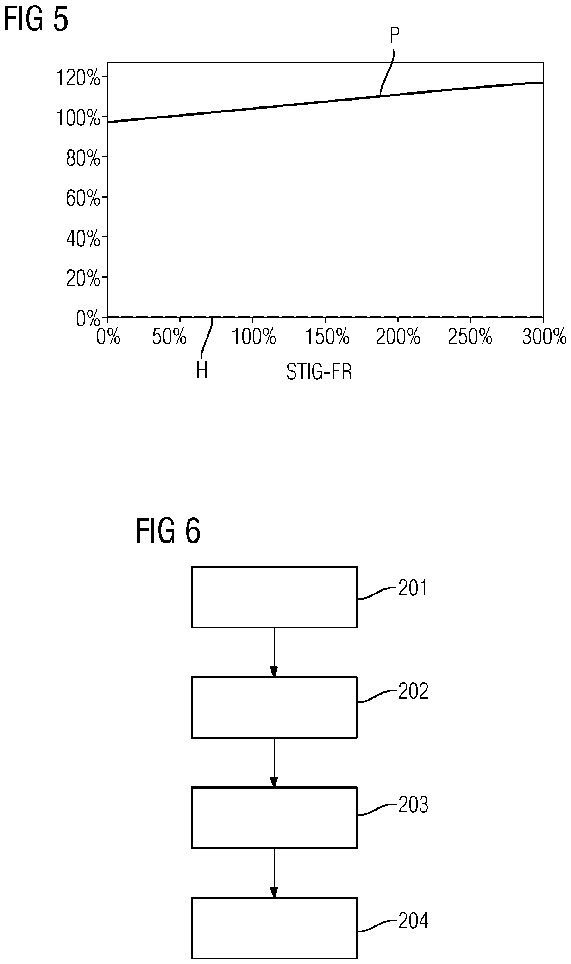

Fig. 4 zeigt eine graphische Darstellung der Veränderung der relativen Abgabeleistung P eines ausführungsgemäßen Gasturbinenkraftwerks 100 sowie der damit einher gehenden Veränderung der entnommenen Wärmemenge H in Abhängigkeit der auf einem Mitteldruckniveau (typischer Druckbereich 15-40 bar) entnommenen Dampfmenge. Die Dampfmenge entspricht der prozentualen Menge an Mitteldruck-Dampf, die dem Wasser-Dampf-Kreislauf 10 entnommen wird (MP-SE: medium pressure - steam extraction). Dieses Absinken der elektrischen Abgabeleistung P des Gasturbinenkraftwerks 100 korreliert im dargestellten Bereich im Wesentlichen mit der entnommenen Wärmemenge des entnommenen Dampfes (H) im Bereich eines Mitteldruckabschnitts. Hierbei ist selbst bei einer Entnahme von 50 % an Dampfwärme lediglich mit einer Leistungseinbuße von etwa 12 % Abgabeleistung P des Gasturbinenkraftwerks 100 zu rechnen. Diese Leistungseinbuße kann gerechtfertigt sein, um später eine zeitlich verzögerte Leistungserhöhung bei Zuführen des so entnommenen Dampfes und nach geeigneter Zwischenspeicherung an die Gasturbine 1 erreichen zu können. Die dabei auftretende Erhöhung der elektrischen Abgabeleistung P des Gasturbinenkraftwerks 100 ist beispielsweise in FIG 5 gezeigt.

Fig. 5 zeigt eine graphische Darstellung der Veränderung der relativen Abgabeleistung P eines ausführungsgemäßen Gasturbinenkraftwerks 100 sowie der damit einher gehenden Veränderung der aufgenommenen Wärmemenge H in Abhängigkeit der der Gasturbine zugeführten Dampfmenge. Die Dampfmenge ist hierbei relativ auf den Anteil an Brennmassenstrom bezogen (STIG-FR: STIG-flow rate). Dort ist zu erkennen, dass nach Zuleitung von Dampf eine Zunahme der durch die Gasturbine 1 erzeugte elektrischen Leistung P erfolgt. Hat der Dampfmassenstrom beispielsweise einen Anteil am zugeführten Brennstoffmassenstrom von etwa 300 %, erfolgt bereits eine Leistungserhöhung um etwa 20 %.

Durch eine gezielte Entnahme von Wärme bzw. von Wasser aus dem Wasser-Dampf-Kreislauf 10 zu einem ersten Zeitpunkt und eine gezielte Zuleitung von Wasser etwa als Dampf, welcher diese Wärme aufweist, an eine Gasturbine, zu einem weiteren nachfolgenden zweiten Zeitpunkt kann eine verbesserte Flexibilisierung des Gasturbinenbetriebs erfolgen.

FIG 6 zeigt eine erste Ausführungsform des erfindungsgemäßen Verfahrens zum flexiblen Betrieb eines vorab beschriebenen Gasturbinenkraftwerks, welches folgende Schritte umfasst:
- Betreiben der Gasturbine und Ableitung des Abgases aus dieser, sowie Wärmeübertragung an den Wasser-Dampf-Kreislauf zur Dampferzeugung (erster Verfahrensschritt 201) ;
- Übertragen von Wärme aus dem Wasser-Dampf-Kreislauf an den Wärmespeicher (zweiter Verfahrensschritt 202);
- Übertragen von Wärme aus dem Wärmespeicher an das Behältnis (dritter Verfahrensschritt 203);
- Übertragen von Wasser aus dem Behältnis an die Gasturbine, insbesondere an die Brennkammer der Gasturbine zur Leistungserhöhung bei Betrieb der Gasturbine (vierter Verfahrensschritt 204).

Weitere Ausführungsformen ergeben sich aus den Unteransprüchen.

## Patentansprüche

1. Gasturbinenkraftwerk (100) umfassend:
eine Gasturbine (1), welche einen Verdichter (5), eine Brennkammer (6) und einen Expander (7) aufweist, weiterhin umfassend einen Wasser-Dampf-Kreislauf (10), welcher wärmetechnisch mit der Gasturbine (1) derart verschaltet ist, dass bei Betrieb der Gasturbine (1) das aus dieser abgeleitete Abgas Wärme an den Wasser-Dampf-Kreislauf (10) zur Dampferzeugung überträgt, wobei der Wasser-Dampf-Kreislauf (10) weiter mit einem Wärmespeicher (20) wärmetechnisch verschaltet ist, der seinerseits wieder mit einem Behältnis (30) zur Bevorratung von Wasser wärmetechnisch verschaltet ist, und wobei das Behältnis (30) fluidtechnisch mit der Gasturbine (1), insbesondere mit der Brennkammer (6) der Gasturbine (1) derart gekoppelt ist, dass Wasser aus dem Behältnis (30) der Gasturbine (1) bei Betrieb derselben zur Leistungserhöhung zugeführt werden kann,
**dadurch gekennzeichnet, dass**
zwischen Behältnis (30) und Gasturbine (1) ein Flash-Ventil (50) geschaltet ist, welches dazu ausgebildet ist, das aus dem Behältnis (30) entnommene Wasser auf ein geringeres Druckniveau zu entspannen, wobei das Flash-Ventil (50) weiter dazu ausgebildet ist, Wasserdampf abzutrennen, um diesen ohne einen ebenfalls abgeschiedenen flüssiqen Anteil des so entspannten Wassers der Gasturbine (1) qezielt zuzuführen.

2. Gasturbinenkraftwerk gemäß Anspruch 1,
**dadurch gekennzeichnet, dass**
der Wärmespeicher (20) das Behältnis (30) umfasst bzw. dieses ist.

3. Gasturbinenkraftwerk gemäß einem der vorhergehenden Ansprüche,
**dadurch gekennzeichnet, dass**
der Wasser-Dampf-Kreislauf (10) einen Abhitzedampferzeuger (15) umfasst, der mit dem Wärmespeicher (20) wärmetechnisch bzw. fluidtechnisch verschaltet ist.

4. Gasturbinenkraftwerk gemäß einem der vorhergehenden Ansprüche,
**dadurch gekennzeichnet, dass**
der Wasser-Dampf-Kreislauf (10) eine Dampfturbine (40) aufweist, die mit dem Wärmespeicher (20) wärmetechnisch bzw. fluidtechnisch verschaltet ist.

5. Gasturbinenkraftwerk gemäß einem der vorhergehenden Ansprüche,
**dadurch gekennzeichnet, dass**
der Wasser-Dampf-Kreislauf (10) und der Wärmespeicher (20) nicht nur wärmetechnisch sondern auch fluidtechnisch verschaltet sind.

6. Gasturbinenkraftwerk gemäß Anspruch 5,
**dadurch gekennzeichnet, dass**
zwischen dem Wasser-Dampf-Kreislauf (10) und dem Wärmespeicher (20) ausgetauschtes Wasser in dem Behältnis (30) zwischengespeichert werden kann.

7. Gasturbinenkraftwerk gemäß einem der Ansprüche 5 oder 6,
**dadurch gekennzeichnet, dass**
die fluidtechnische Verschaltung zwischen Wasser-Dampf-Kreislauf (10) und Wärmespeicher (20) am Wasser-Dampf-Kreislauf (10) an einem Ort vorgenommen ist, an welchem bei regulärem Betrieb des Gasturbinenkraftwerks (100) ein Dampfdruck besteht, der wenigstens dem Druck in der Brennkammer (6) der Gasturbine (1) bei regulärem Betrieb entspricht.

8. Gasturbinenkraftwerk gemäß einem der Ansprüche 5 bis 7,
**dadurch gekennzeichnet, dass**
die fluidtechnische Verschaltung zwischen Wasser-Dampf-Kreislauf (10) und Wärmespeicher (20) am Wasser-Dampf-Kreislauf (10) an einem Abhitzedampferzeuger (15) vorliegt, insbesondere im Bereich eines Mitteldruckabschnitts des Abhitzedampferzeugers (15).

9. Gasturbinenkraftwerk gemäß einem der vorhergehenden Ansprüche,
**dadurch gekennzeichnet, dass**
das Behältnis (30) als Druckwasserbehältnis ausgeführt ist.

10. Gasturbinenkraftwerk gemäß einem der vorhergehenden Ansprüche,
**dadurch gekennzeichnet, dass**
der Wärmespeicher (20) als sensibler Wärmespeicher und/oder als latenter Wärmespeicher und/oder als thermo-chemischer Wärmespeicher ausgebildet ist.

11. Verfahren zum flexiblen Betrieb eines Gasturbinenkraftwerks (100) gemäß einem der vorhergehenden Ansprüche, welches folgende Schritte umfasst:
- Betreiben der Gasturbine (1) und Ableitung des Abgases aus dieser, sowie Wärmeübertragung an den Wasser-Dampf-Kreislauf (10) zur Dampferzeugung;
- Übertragen von Wärme aus dem Wasser-Dampf-Kreislauf (10) an den Wärmespeicher (20);
- Übertragen von Wärme aus dem Wärmespeicher (20) an das Behältnis (30);
- Übertragen von Wasser aus dem Behältnis (30) an die Gasturbine (1), insbesondere an die Brennkammer (6) der Gasturbine (1) zur Leistungserhöhung bei Betrieb der Gasturbine (1).

12. Verfahren gemäß Anspruch 11,
**dadurch gekennzeichnet, dass**
der Schritt des Übertragens von Wärme aus dem Wasser-Dampf-Kreislauf (10) an den Wärmespeicher (20) von dem Schritt des Übertragens von Wärme aus dem Wärmespeicher (20) an das Behältnis (30) mit umfasst ist;

13. Verfahren gemäß einem der vorhergehenden Ansprüche 11 oder 12,
**dadurch gekennzeichnet, dass**
der Schritt des Übertragens von Wasser aus dem Behältnis (30) an die Gasturbine (1) im Vergleich zu den anderen Schritten zeitlich nachfolgend erfolgt, insbesondere zu einer Zeit der erhöhten Leistungsabgabe der Gasturbine (1) bei erhöhter Nachfrage nach elektrischer Leistung aus einem Stromversorgungsnetzwerk.

## Claims

1. Gas turbine plant (100) comprising:
a gas turbine (1), which has a compressor (5), a combustion chamber (6) and an expander (7), further comprising a water-steam circuit (10) which is thermally connected to the gas turbine (1) in such a way that, during the operation of said gas turbine (1), the waste gas discharged therefrom transfers heat to the water-steam circuit (10) in order to generate steam, wherein the water-steam circuit (10) is further thermally connected to a heat accumulator (20), which in turn is thermally connected to a container (30) for storing water, and wherein the container (30) is fluidically coupled to the gas turbine (1), in particular to the combustion chamber (6) of the gas turbine (1), in such a way that water can be supplied from the container (30) to the gas turbine (1) during the operation of the latter in order to increase power output,
**characterized in that**
a flash valve (50) is connected between the container (30) and the gas turbine (1), said valve being designed to reduce the pressure of the water taken from the container (30) to a lower pressure level, wherein the flash valve (50) is furthermore designed to separate out steam in order to feed the latter selectively to the gas turbine (1) without a liquid component, likewise separated out, of the water which has been depressurized in this way.

2. Gas turbine plant according to Claim 1,
**characterized in that**
the heat accumulator (20) comprises or is the container (30).

3. Gas turbine plant according to one of the preceding claims,
**characterized in that**
the water-steam circuit (10) comprises a heat recovery steam generator (15), which is connected thermally and fluidically to the heat accumulator (20).

4. Gas turbine plant according to one of the preceding claims,
**characterized in that**
the water-steam circuit (10) has a steam turbine (40), which is connected thermally and fluidically to the heat accumulator (20).

5. Gas turbine plant according to one of the preceding claims,
**characterized in that**
the water-steam circuit (10) and the heat accumulator (20) are connected not only thermally but also fluidically.

6. Gas turbine plant according to Claim 5,
**characterized in that**
water exchanged between the water-steam circuit (10) and the heat accumulator (20) can be stored temporarily in the container (30).

7. Gas turbine plant according to either of Claims 5 and 6,
**characterized in that**
the fluidic connection between the water-steam circuit (10) and the heat accumulator (20) at the water-steam circuit (10) is produced at a location at which the steam pressure prevailing during regular operation of the gas turbine plant (100) corresponds at least to the pressure in the combustion chamber (6) of the gas turbine (1) during regular operation.

8. Gas turbine plant according to one of Claims 5 to 7,
**characterized in that**
the fluidic connection between the water-steam circuit (10) and the heat accumulator (20) at the water-steam circuit (10) exists at a heat recovery steam generator (15), in particular in the region of a medium-pressure section of the heat recovery steam generator (15).

9. Gas turbine plant according to one of the preceding claims,
**characterized in that**
the container (30) is embodied as a pressurized water container.

10. Gas turbine plant according to one of the preceding claims,
**characterized in that**
the heat accumulator (20) is designed as a sensible heat accumulator and/or as a latent heat accumulator and/or as a thermochemical heat accumulator.

11. Method for the flexible operation of a gas turbine plant (100) according to one of the preceding claims, which comprises the following steps:
- operating the gas turbine (1) and discharging the exhaust gas from the latter and transferring heat to the water-steam circuit (10) for steam generation;
- transferring heat from the water-steam circuit (10) to the heat accumulator (20);
- transferring heat from the heat accumulator (20) to the container (30);
- transferring water from the container (30) to the gas turbine (1), in particular to the combustion chamber (6) of the gas turbine (1), to increase power during operation of the gas turbine (1).

12. Method according to Claim 11,
**characterized in that**
the step of transferring heat from the water-steam circuit (10) to the heat accumulator (20) is included in the step of transferring heat from the heat accumulator (20) to the container (30).

13. Method according to one of preceding Claims 11 and 12,
**characterized in that** the step of transferring water from the container (30) to the gas turbine (1) takes place later in time than the other steps, in particular at a time of increased power output by the gas turbine (1) in the case of increased demand for electric power from a power supply network.

## Revendications

1. Centrale (100) à turbine à gaz comprenant :
une turbine (1) à gaz, qui a un compresseur (5), une chambre de combustion (6) et un détendeur (7), comprenant en outre un circuit (10) eau-vapeur, qui est combiné en technique de la chaleur à la turbine (1) à gaz, de manière à ce que, lorsque la turbine (1) à gaz fonctionne, la chaleur du gaz d'échappement s'échappant de celle-ci est, pour la production de vapeur, transmise au circuit (10) eau-vapeur, le circuit (10) eau-vapeur étant en outre combiné, en technique de la chaleur, à un accumulateur (20) de chaleur, qui est combiné pour sa part à nouveau, en technique de la chaleur, à un récipient (30) de mise en réserve d'eau et dans laquelle le récipient (30) est couplé en technique fluidique à la turbine (1) à gaz, notamment à la chambre de combustion (6) de la turbine (1) à gaz, de manière à pouvoir envoyer l'eau du récipient (30) à la turbine (1) à gaz, lors du fonctionnement de celle-ci, pour obtenir une augmentation de puissance,
**caractérisée en ce que**
il est monté, entre le récipient (30) et la turbine (1) à gaz, une vanne (50) flash constituée de manière à détendre de l'eau prélevée du récipient (30) à un niveau de pression plus bas, la vanne (50) flash étant constituée en outre pour séparer de la vapeur d'eau afin de l'envoyer, d'une manière ciblée, à la turbine (1) à gaz, sans une proportion liquide, séparée également, de l'eau ainsi détendue.

2. Centrale à turbine à gaz suivant la revendication 1,
**caractérisée en ce que**
l'accumulateur (20) de chaleur comprend le récipient ou est celui-ci.

3. Centrale à turbine à gaz suivant l'une des revendications précédentes,
**caractérisée en ce que**
le circuit (10) eau-vapeur comprend un générateur (15) de vapeur à récupération de la chaleur perdue, qui est combiné, en technique de la chaleur ou en technique fluidique, à l'accumulateur (20) de chaleur.

4. Centrale à turbine à gaz suivant l'une des revendications précédentes,
**caractérisée en ce que**
le circuit (10) eau-vapeur a une turbine (40) à vapeur, qui est combinée, en technique de la chaleur ou en technique fluidique, à l'accumulateur (20) de chaleur.

5. Centrale à turbine à gaz suivant l'une des revendications précédentes,
**caractérisée en ce que**
le circuit (10) eau-vapeur et l'accumulateur (20) de chaleur sont combinés, non seulement en technique de la chaleur, mais aussi en technique fluidique.

6. Centrale à turbine à gaz suivant la revendication 5,
**caractérisée en ce que**
de l'eau, échangée entre le circuit (10) eau-vapeur et l'accumulateur (20) de chaleur, peut être stockée intermédiairement dans le récipient (30).

7. Centrale à turbine à gaz suivant l'une des revendications 5 ou 6,
**caractérisée en ce que**
la combinaison en technique fluidique, entre le circuit (10) eau-vapeur et l'accumulateur (20) de chaleur, est effectuée sur le circuit (10) eau-vapeur, en un emplacement où, lorsque la centrale (100) à turbine à gaz fonctionne régulièrement, il se constitue une pression de la vapeur, qui correspond au moins à la pression dans la chambre de combustion (6) de la turbine (1) à gaz en fonctionnement régulier.

8. Centrale à turbine à gaz suivant l'une des revendications 5 à 7,
**caractérisée en ce que**
la combinaison en technique fluidique, entre le circuit (10) eau-vapeur et l'accumulateur (20) de chaleur, s'effectue sur le circuit (10) eau-vapeur sur un générateur (15) de vapeur à récupération de la chaleur perdue, notamment dans la région de la section de moyenne pression du générateur (15) de vapeur à récupération de la chaleur perdue.

9. Centrale à turbine à gaz suivant l'une des revendications précédentes,
**caractérisée en ce que**
le récipient (30) est réalisé en récipient d'eau sous pression.

10. Centrale à turbine à gaz suivant l'une des revendications précédentes,
**caractérisée en ce que**
l'accumulateur (20) de chaleur est constitué sous la forme d'un accumulateur de chaleur sensible et/ou d'un accumulateur de chaleur latente et/ou sous la forme d'un accumulateur de chaleur thermochimique.

11. Procédé pour faire fonctionner de manière souple une centrale (100) à turbine à gaz suivant l'une des revendications précédentes, qui comprend les stades suivants :
- on fait fonctionner la turbine (1) à gaz et on en dérive du gaz d'échappement ainsi qu'on effectue un transfert de chaleur au circuit (10) eau-vapeur pour produire de la vapeur ;
- on transfère de la chaleur du circuit (10) eau-vapeur à l'accumulateur (20) de chaleur ;
- on transfère de la chaleur de l'accumulateur (20) de chaleur au récipient (30) ;
- on transfère de l'eau du récipient (30) à la turbine (1) à gaz, notamment à la chambre de combustion (6) de la turbine (1) à gaz, pour augmenter la puissance lorsque la turbine (1) à gaz est en fonctionnement.

12. Procédé suivant la revendication 11,
**caractérisé en ce que**
le stade de transfert de la chaleur du circuit (10) eau-vapeur à l'accumulateur (20) de chaleur est compris par le stade de transfert de la chaleur de l'accumulateur (20) de chaleur au récipient (30).

13. Procédé suivant l'une des revendications précédentes 11 ou 12,
**caractérisé en ce que**
le stade de transmission de l'eau du récipient (30) à la turbine (1) à gaz s'effectue successivement dans le temps par rapport aux autre stades, notamment à un instant où la turbine (1) à gaz cède davantage de puissance, alors que la demande en puissance électrique d'un réseau d'alimentation en courant est plus grande.
